# EUROPEAN PATENT SPECIFICATION

(11) **EP 4 607 186 B1**
(45) Date of publication and mention of the grant of the patent: **25.11.2026**
(21) Application number: 25159120.2
(22) Date of filing: 20.02.2025
(51) Int. Cl.: G01N 25/72, B64F 5/45

(54) **AIRCRAFT FUEL TANK FASTENER INSPECTION**
INSPEKTION VON FLUGZEUGKRAFTSTOFFTANKBEFESTIGUNGSELEMENTEN
INSPECTION DE FIXATION DE RÉSERVOIR DE CARBURANT D'AÉRONEF

(30) Priority: 22.02.2024 GB 202402533
(43) Date of publication of application: 27.08.2025
(73) Proprietor: Airbus Operations Limited, Bristol BS34 7PA (GB)
(72) Inventor: WOLLASTON, Timothy David James, Bristol, BS34 7PA (GB)
(74) Representative: Harvey, Alexander James

(56) References cited:
- CN-A- 110 927 813
- US-A- 4 647 220
- US-A1- 2011 181 393
- ZWESCHPER TH. ET AL: "Detection of loose rivets in aeroplane components using lockin thermography", PROCEEDINGS OF THE 1998 INTERNATIONAL CONFERENCE ON QUANTITATIVE INFRARED THERMOGRAPHY, 1998, XP093289048, DOI: 10.21611/qirt.1998.025

## Description

### FIELD OF THE INVENTION

The present invention relates to a method of inspecting an aircraft fuel tank fastener assembly.

### BACKGROUND OF THE INVENTION

Fasteners for aircraft fuel tanks may require a safety compliant protection from a direct lightning attachment current or conducted current flowing through the fuel tank structure. Spark containment caps can provide this protection.

US2016/0244181 and US2016/0138641 are two examples of spark containment caps. Another example is disclosed in US2022/0063837, which discloses a cap for use with a blind fastener.

A problem with such spark containment caps is that they must be removed to visually inspect the tail of the fastener.

Thermographic inspection of fasteners of an aircraft in general is known from Zweschper, Th. et al.: "Detection of loose rivets in aeroplane components using lockin thermography", Proceedings of the 1998 International Conference on Quantitative InfraRed Thermography, 1998, XP093289048, DOI: 10.21611/qirt.1998.025.

### SUMMARY OF THE INVENTION

A first aspect of the invention provides a method of inspecting an aircraft fuel tank fastener assembly, the assembly comprising: a fuel tank with a fuel chamber; a fastener comprising a head and a tail at opposite ends of the fastener; and a cap inside the fuel chamber, wherein the cap surrounds the tail of the fastener, the method comprising: heating the tail of the fastener; obtaining a thermal image of the tail of the fastener; and inspecting the thermal image of the tail of the fastener.

Optionally the fuel tank comprises a panel; and the fastener passes through the panel.

Optionally the cap comprises a cap body.

Optionally the panel is formed from an infrared transparent material.

Optionally the cap body is formed from an infrared transparent material.

Optionally the panel and/or the cap body are formed from a non-metallic material.

Optionally the panel and/or the cap body are formed from a polymeric material.

Optionally the panel and/or the cap body are formed from a thermoplastic polymeric material.

Optionally the panel and/or the cap body are formed from an aromatic polymeric material.

Optionally the thermoplastic polymeric material is selected from Acrylonitrile butadiene styrene (also referred to as ABS), polyamide (also referred to as PA or Nylon), Polybenzimidazole (also referred to as PBI), Polycarbonate (also referred to as PC), Polyether sulfone (also referred to as PES), Polyoxymethylene (also referred to as POM), Polyether ether ketone (also referred to a PEEK), Polyetherimide (also referred to as PEI), Polyethylene (also referred to as PE), Polyphenylene oxide (also referred to as PPO), Polyphenylene sulphide (also referred to as PPS), Polypropylene (also referred to as PP), Polystyrene (also referred to as PS), Polyvinyl chloride (also referred to as PVC), Polyvinylidene fluoride (also referred to as PVDF), Polytetrafluoroethylene (also referred to as PTFE), or a combination thereof.

Optionally the thermoplastic polymeric material is selected from polyamide (also referred to as PA or Nylon), Polyether sulfone (also referred to as PES), Polyether ether ketone (also referred to a PEEK), Polyetherimide (also referred to as PEI), Polypropylene (also referred to as PP), or a combination thereof.

Optionally the cap body is formed from polyetherimide (PEI), Polyamide 11, (also referred to as PA 11, or Nylon 11), Polyamide 12 (also referred to as PA 12, or Nylon 6, 12), Polyamide 46 (also referred to as PA 46, or Nylon 4,6), Polyamide 6 (also referred to as PA 6, or Nylon 6), Polyamide 66, or a combination thereof.

Optionally the cap body is formed from polyetherimide (PEI).

Optionally the cap body is formed from glass-filled polyetherimide (PEI).

Optionally the fuel tank comprises a fibre-reinforced polymer panel; and the fastener passes through the fibre-reinforced polymer panel.

Optionally the fibre-reinforced polymer panel is a carbon-fibre reinforced polymer panel.

Optionally the method further comprises identifying the fastener as a suspect fastener before heating the tail of the fastener.

Optionally identifying the fastener as a suspect fastener comprises identifying the fastener as a suspect fastener by visual inspection.

Optionally the method is performed between flights of the aircraft.

Optionally the tail of the fastener is heated individually, with substantially no heating of any neighbouring fasteners as the tail of the fastener is heated.

Optionally heating the tail of the fastener comprises: contacting the head of the fastener with a probe; and using the probe in contact with the head of the fastener to heat the tail of the fastener.

Optionally the method comprises contacting the head of the fastener with a probe outside the fuel chamber; using the probe in contact with the head of the fastener to heat the tail of the fastener; disengaging the probe from the head of the fastener; and then obtaining the thermal image of the tail of the fastener with the probe disengaged from the head of the fastener so that the probe does not obscure the tail of the fastener in the thermal image.

Optionally heating the tail of the fastener comprises: contacting the head of the fastener with a probe; and using the probe to heat the tail of the fastener by conductive transfer of thermal energy from the probe to the tail of the fastener via the head of the fastener.

Optionally the method comprises using a heating device outside the fuel chamber to heat the tail of the fastener; and using a camera inside the fuel chamber to obtain the thermal image of the tail of the fastener.

Optionally the imaging device is held by a human inside the fuel chamber during the obtaining of the thermal image, and the human enters the fuel chamber via a manhole.

Optionally the method comprises using a camera outside the fuel chamber to obtain the thermal image of the tail of the fastener.

Optionally there is a volume of air between the tail of the fastener and the cap.

Optionally the volume of air extends around a full circumference of the tail of the fastener.

Optionally there is no contact between the tail of the fastener and the cap.

Optionally the tail of the fastener comprises an externally threaded shaft; and an internally threaded nut carried by the externally threaded shaft.

Optionally the fastener is formed from a thermally conductive material.

Optionally the fastener is formed from a thermally conductive metallic material.

Optionally there is a volume of air between the nut and the cap.

Optionally the volume of air extends around a full circumference of the nut.

Optionally there is no contact between the nut and the cap.

Optionally the nut has an outer periphery with a non-circular (eg hexagonal) cross-section.

Optionally the cap is bonded to the fuel tank by adhesive material.

Optionally the fuel chamber contains liquid fuel during the heating and during the obtaining of the thermal image.

Optionally the fuel chamber contains liquid fuel in contact with the cap during the heating and during the obtaining of the thermal image.

Optionally the method further comprises draining fuel from the fuel chamber so that the cap is not in contact with fuel during the heating and during the obtaining of the thermal image.

Optionally the head of the fastener is outside the fuel chamber and the tail of the fastener is inside the fuel chamber.

Optionally the thermal image of the tail of the fastener is obtained from a viewing angle which is selected such that at least part of the tail of the fastener is visible in the thermal image, and not obscured by the head of the fastener.

Optionally the method comprises obtaining multiple thermal images of the tail of the fastener from different viewing angles; and inspecting the multiple thermal images of the tail of the fastener.

### BRIEF DESCRIPTION OF THE DRAWINGS

Embodiments of the invention will now be described with reference to the accompanying drawings, in which:
Figure 1 shows an aircraft;
Figure 2 is a cross-sectional view showing a fastener and nut cap;
Figure 3 shows a visual inspection of the fastener;
Figure 4 shows the fastener being heated;
Figure 5 shows an intact fastener being thermally imaged from outside the fuel tank;
Figure 6 shows a damaged fastener being thermally imaged from outside the fuel tank;
Figure 7 shows a damaged fastener being thermally imaged from inside the fuel tank.

### DETAILED DESCRIPTION OF EMBODIMENT(S)

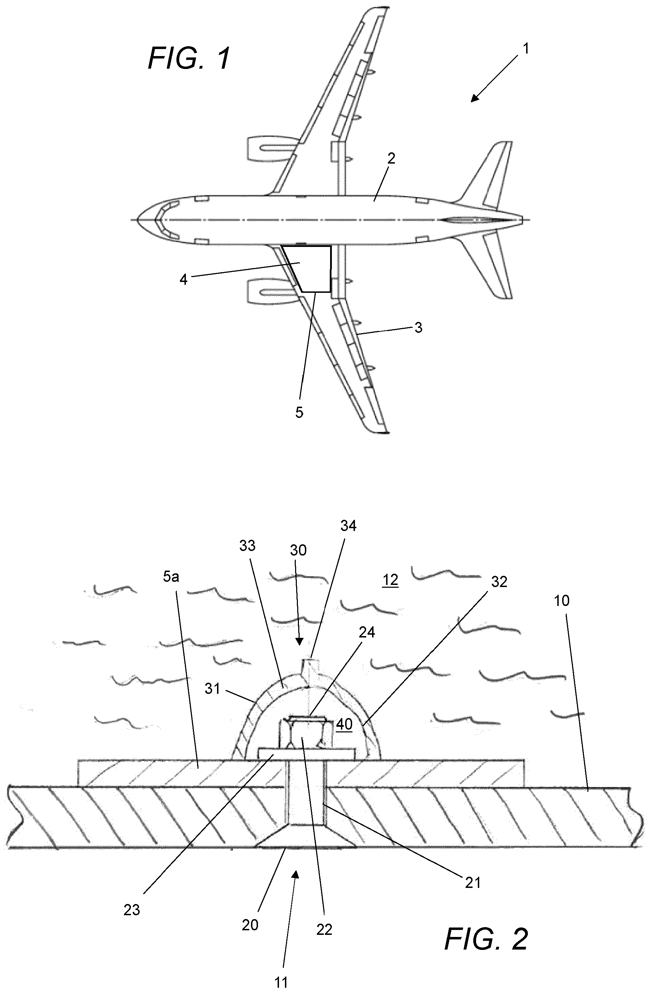

The aircraft 1 of Figure 1 includes a fuselage 2 and wings 3 extending from the fuselage 2. Fuel tanks are formed in the fuselage and wings 3. One such fuel tank 4 is schematically shown in Figure 1. The upper and lower boundaries of the tank 4 are provided by upper and lower skins of the wing 3, the fore and aft boundaries of the tank 4 are provided by forward and rear spars of the wing, and the inboard and outboard boundaries of the fuel tank 4 are provided by wing ribs 5.

The wing 3 is manufactured by assembling the skins, spars and ribs to form a wing box, then joining them together with fasteners. The ribs 5 have rib flanges (conventionally known as rib feet) which are joined to the skins, and the spars have spar flanges which are joined to the skins.

In a traditional method, the fasteners are two-sided fasteners (for example a hexagonal nut and bolt) which require access to both sides of the joint to tighten the nut. Alternatively the fasteners may be blind fasteners which can be both inserted and tightened from one side only (outside the wing box).

Figure 2 is a cross-sectional view showing part of the fuel tank 4: a lower skin 10 of the wing, and a rib foot 5a joined to the lower skin 10 by a fastener 11.

The fastener 11 joins components of the fuel tank 5 - in this case the lower skin 10 and the rib foot 5a. In other embodiments the fastener 11 may join other components of the fuel tank 5, for instance an upper skin and a spar.

The lower skin 10 comprises a carbon fibre-reinforced polymer panel, formed with a cylindrical bore and a countersink. The rib foot 5a may be formed from a carbon fibre-reinforced polymer. The rib foot 5a is formed with a cylindrical bore.

The inside of the fuel tank 4 comprises a fuel chamber 12 filled with liquid fuel, such as kerosene or any other hydrocarbon fuel.

The fastener 11 has head and a tail at opposite ends of the fastener 11. The fastener 11 comprises a bolt 20, 21; an internally threaded nut 22 and a washer 23. The bolt has a metallic head 20 and a metallic shaft 21 which extends through the cylindrical bores to a distal end 24 which is externally threaded. The internally threaded nut 22 is carried by the externally threaded distal end 24 of the shaft 21 of the bolt. The nut 22 is made of metallic material and has an outer periphery with a non-circular (eg hexagonal) cross-section. The head 20 of the bolt is seated in the countersink so it lies flush with the aerodynamic outer surface of the lower wing skin 10.

The head 20 of the bolt (along with any paint or other surface coating layer which coats the head 20 of the bolt) provides the head of the fastener. The nut 22, washer 23 and threaded distal end 24 of the shaft together provide the tail of the fastener. The head 20 of the fastener is outside the fuel chamber 12 and the various components 22-24 of the tail are all inside the fuel chamber 12.

A spark containment cap 30 (commonly known as a nut-cap) inside the fuel chamber 12 surrounds the tail 22-24 of the fastener. The cap 30 is double-walled, with an outer cap body 31 and an inner cap body 32, each formed from an opaque polymeric material.

By way of non-limiting example, the cap bodies 31, 32 may be formed from a glass filled polyetherimide (PEI) resin such as UItem 2400 or UItem 2310, available from SABIC (RTM) Innovative Plastics Holding BV.

The cap 30 is bonded to the fuel tank by injecting adhesive material 33 into a gap between the cap bodies 31, 32 via a port 34. The adhesive material 33 flows into contact with the fuel tank 4 (in this case contacting the rib foot 5a) then cures to bond the cap 30 securely in place.

Two examples of suitable double-walled caps can be found in US2016/0244181 and US2016/0138641**.**

There is a volume of air 40 between the tail 22-24 of the fastener and the cap 30. This volume of air 40 extends around a full circumference of the tail 22-24 of the fastener, and provides space for plasma to expand in the event of outgassing during a lightning strike.

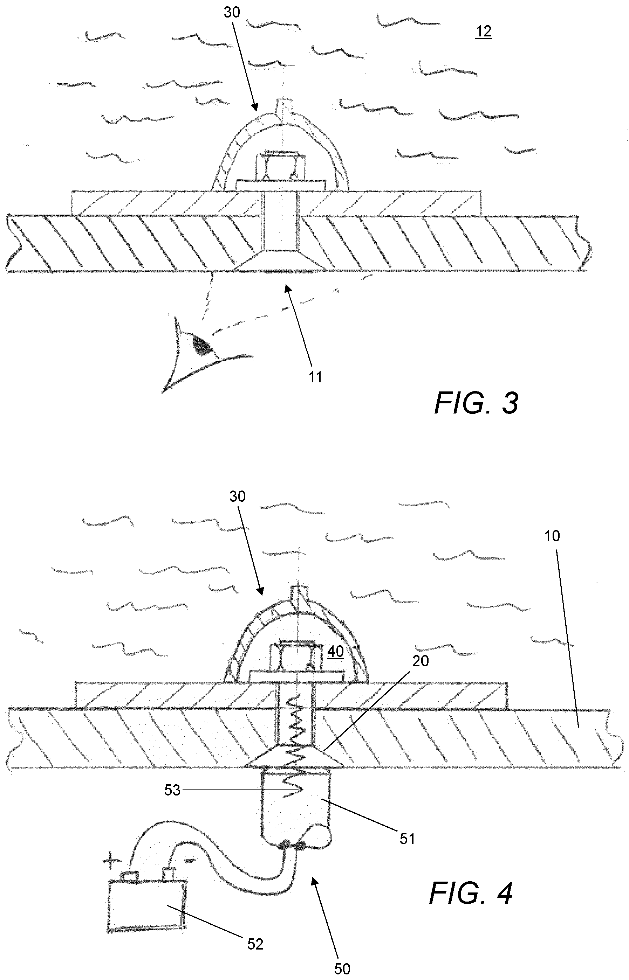

When the aircraft is in-service, a pilot does a "walk-around" visual inspection of the aircraft before each flight as shown in Figure 3. This visual inspection may identify a suspect fastener - that is, a fastener which is suspected to be damaged. On a less regular basis (for example every one or two years) the aircraft may be parked in a hangar for a more comprehensive inspection process which gives more opportunities for a suspect fastener to be identified by visual inspection, or some other inspection method.

One indication of a suspect fastener is if the head 20 of the fastener does not lie flush with the outer surface of the lower skin 10. Another indication of a suspect fastener is cracked paint around the head 20 of the fastener - such cracking being potentially indicative of a fastener which has become loose and rotated as a result.

Since the tail 22-24 of the suspect fastener, inside the fuel chamber 12, is surrounded by an opaque cap 30 it is not possible to visually inspect the tail 22-24 from inside the fuel chamber 12. Therefore the cap 30 would need to be removed for such a visual inspection to take place. The fact that the cap 30 is bonded in place makes such removal difficult, and also makes it difficult to re-install the cap 30 after the visual inspection.

To avoid removal of the cap 30 after the fastener has been identified as a suspect fastener in the visual inspection of Figure 3, a thermal inspection method is instead used as shown in Figures 4-6.

First the tail of the fastener is heated by a probe 50 as shown in Figure 4. The probe 50 comprises a heating element 51 which is heated by resistive heating, driven by a battery 52. The head 20 of the fastener is contacted with the heating element 51 as shown in Figure 4, then the probe 50 is used to heat the tail of the fastener by conductive transfer of thermal energy 53 from the heating element 51 to the tail 22-24 of the fastener via the head 20 and the shaft 21. Hence the tail 22-24 of the fastener is heated indirectly via the head 20 and shaft 21 of the fastener.

Note that the fastener 11 is heated directly via the probe 50, rather than being heated indirectly via the lower cover 10. Note that it would not be possible to heat the fastener by conduction of heat via the lower cover 10, due to the low thermal conductivity of the fibre carbon fibre-reinforced polymer material which forms the lower cover 10.

Note also that there may be a layer of paint or other surface coating layer (not shown) between the heating element 51 and the metallic head 20 of the bolt. For the purposes of this disclosure such a surface coating layer is considered part of the head of the fastener, so the heating element 51 can be said to be contacting the head of the fastener.

The fastener 11 is heated individually, with substantially no heating of any neighbouring fasteners as the fastener 11 is heated. This makes the heating operation targeted and energy-efficient.

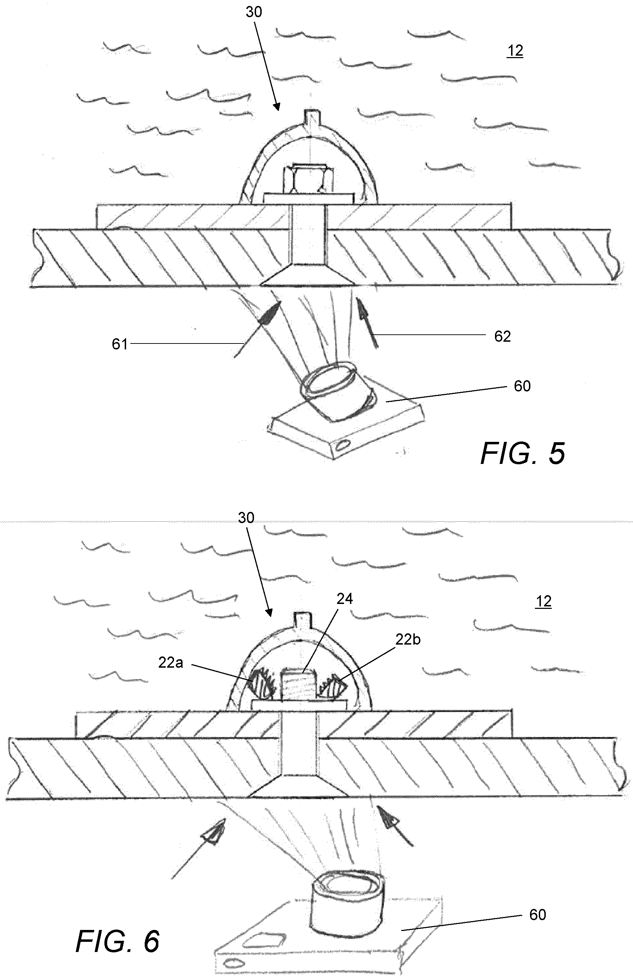

After the probe 50 in contact with the head of the fastener has been used to heat the fastener as in Figure 4, the probe 50 is disengaged from the head of the fastener and then a thermal image of the fastener at an elevated temperature is obtained as in Figure 5. It shall be appreciated that upon being heated by the probe 50, the heated fastener will begin to emit infrared radiation which can be detected by a thermal imaging camera 60 so as to obtain a thermal image of the fastener.

The thermal image is obtained with the probe 50 disengaged from the head of the fastener so that the probe 50 does not obscure any parts of the fastener in the thermal image.

In the case of Figure 5, a camera 60 outside the fuel chamber 12 is used to obtain the thermal image. By way of example the camera 60 may comprise a thermal imaging camera attached via a USB connection to a hand-held smartphone or tablet. An example of a suitable thermal imaging camera is the TOPDON (RTM) TC001. The thermal imaging camera acquires one or more thermal images which can be displayed in real time on a display of the smartphone or tablet.

The fuel chamber 12 contains liquid fuel which is in contact with the cap 30 as the tail of the fastener is heated (Figure 4) and also during the imaging (Figure 5). The cap 30 and the volume of air 40 thermally insulate the tail 22-24 of the fastener from the liquid fuel, which reduces heat loss into the liquid fuel. Similarly the carbon fibre-reinforced polymer material of the lower cover 10 has low thermal conductivity so there is relatively little heat loss into the lower cover 10 from the head 20 of the fastener or from the root of the shaft 21. Hence all parts of the fastener 11 remain at a sufficiently high temperature to stand out in the thermal image(s).

The camera 60 is held by hand and can be moved and rotated to view the fastener from a range of viewing angles, including the viewing angle of Figure 5 and other more oblique viewing angles indicated by arrows 61, 62. Optionally the camera 60 is moved and rotated to take a series of thermal images from a range of viewing angles.

The multiple thermal images of the fastener are then inspected to determine whether any part of the fastener is damaged.

Some of the thermal images may only contain the head 20 of the fastener - such thermal images are referred to below as thermal images of the head of the fastener. Others (for instance those taken from more oblique viewing angles) will include a thermal image of some or all parts of the tail 22-24 of the fastener - such thermal images are referred to below as thermal images of the tail 22-24 of the fastener. Hence the thermal images of the head of the fastener may be inspected to determine whether the head 20 of the fastener is damaged, and the thermal images of the tail of the fastener may be inspected to determine whether the tail 22-24 of the fastener is damaged.

The nut 22 and bolt 20,21 are both made from a thermally conductive metallic material, so if the nut 22 is in intimate contact with the bolt, as in Figure 5, then the nut 22 will heat up to a similar temperature and hence will appear in one or more of the thermal images of the tail of the fastener. Optionally the washer 23 is made of a thermally and electrically insulating material, so it does not heat up and obscure the nut 22 in these thermal images.

In the case of Figure 5, even though the fastener has been identified as a suspect fastener in the visual inspection of Figure 3, the thermal inspection method would demonstrate that the fastener is not damaged because the nut 22 is intact and fully visible in at least some of the thermal images of the tail 22-24 of the fastener.

Figure 6 gives an example where the fastener 11 is damaged, and the nut has fractured into two or more fragments 22a, 22b. The volume of air 40 provides space for the fragments 22a, 22b to fall away from the distal end 24 of the shaft, so the internal threads of the fragments 22a, 22b are no longer in intimate thermal contact with the external threads of the distal end 24 of the shaft. As a result, the fragments 22a, 22b will not heat up and hence are not visible in any of the thermal images of the tail 22-24 of the fastener. The only part of the tail of the fastener in these thermal images will be the distal end 24 of the shaft of the bolt.

The volume of air 40 preferably extends around a full circumference of the nut 22, so the fragments 22a, 22b can fall in any direction.

In the case of Figure 6, the thermal inspection method demonstrates that the fastener is damaged because the nut 22 is not intact and not visible in any of the thermal images.

It shall be appreciated that whilst the method of Figures 5 to 6 has been described with reference to an aircraft fuel tank fastener assembly in which the rib foot 5a and the lower cover 10 are formed from a carbon fibre-reinforced polymer, the rib foot 5a and the lower cover 10 may alternatively be formed from other material(s) which are "transparent" to the infrared radiation emitted by the fastener having been heated by the probe 50 (which is subsequently detected by the camera 60 to obtain the thermal image).

In other words, the lower cover 10 and the rib foot 5a may be formed of any suitable "infrared transparent" material.

The term "infrared transparent" is defined herein to mean a material (or substance) through which infrared radiation (i.e., electromagnetic radiation having wavelengths of between 650nm and 1mm) is able to pass.

The method of Figures 5 and 6 enables a camera 60 outside the fuel chamber 12 to obtain the thermal image(s) quickly without having to drain the fuel from the fuel chamber 12. It shall also be appreciated that since the thermal image(s) are obtained from outside the fuel chamber 12, the method of Figures 5 to 6 may also be used to inspect fasteners which are contained within caps 30 made from non-infrared transparent materials.

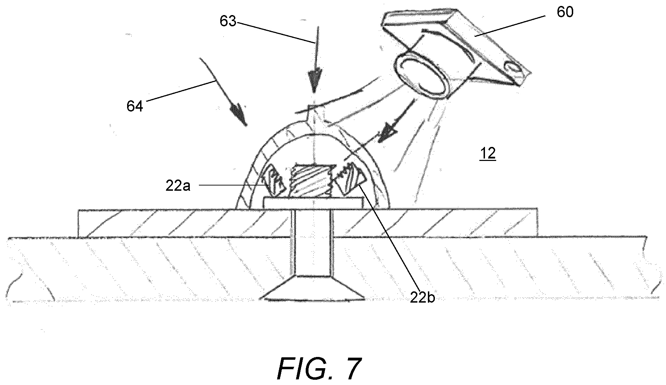

In an alternative shown in Figure 7, a camera 60 inside the fuel chamber 12 is used to acquire the thermal image(s) of the tail of the fastener.

In this case the fuel is drained from the fuel chamber 12, so that the cap 30 is not in contact with fuel as the tail of the fastener is heated (as in Figure 3) or imaged (as in Figure 7).

A human inspector holding the camera 60 enters the fuel chamber 12 via a manhole, then moves the camera 60 around a series of viewing angles 63, 64 as in Figure 7 in order to observe the infrared radiation being emitted by the heated fastener, obtaining a series of thermal images of the fastener as they do so. Since the camera 60 is inside the fuel chamber 12, each of these thermal images will include a thermal image of the tail 22-24 of the fastener from a different viewing angle. The cap 30 will not obscure the fastener in the thermal images because it is formed from a thermally insulating polymeric material it is not in contact with the metallic nut 22 (at least when the nut 22 is intact).

In the case of Figure 7 the nut has fractured into two or more fragments 22a, 22b so the internal threads of the nut are no longer in intimate thermal contact with the external threads of the distal end 24 of the shaft. As a result, the fragments 22a, 22b will not heat up and hence are not visible in any of the thermal images taken from inside the fuel chamber 12 as in Figure 7.

It shall be appreciated that whilst the method of Figure 7 has been described with reference to a cap 30 which is formed from a glass filled polyetherimide (PEI), the cap 30 may alternatively be formed from other material(s) which are "transparent" to the infrared radiation emitted by the fastener upon being heated by the probe 50.

Examples of such materials include, but are not limited to, Acrylonitrile butadiene styrene (also referred to as ABS), polyamide (also referred to as PA or Nylon), Polybenzimidazole (also referred to as PBI), Polycarbonate (also referred to as PC), Polyether sulfone (also referred to as PES), Polyoxymethylene (also referred to as POM), Polyether ether ketone (also referred to a PEEK), Polyetherimide (also referred to as PEI), Polyethylene (also referred to as PE), Polyphenylene oxide (also referred to as PPO), Polyphenylene sulphide (also referred to as PPS), Polypropylene (also referred to as PP), Polystyrene (also referred to as PS), Polyvinyl chloride (also referred to as PVC), Polyvinylidene fluoride (also referred to as PVDF), Polytetrafluoroethylene (also referred to as PTFE), or a combination thereof.

In other words, the cap 30 may be formed of any suitable "infrared transparent" material.

The use of a camera 60 outside the fuel chamber 12 to obtain the thermal image(s) of the tail of the fastener (as in Figure 5) provides a quick and easy inspection method which can be used to check a suspect fastener, identified by a pilot during a "walk-around" visual inspection between flights of the aircraft, without delaying the next flight.

The use of a camera 60 inside the fuel chamber 12 to obtain the thermal image(s) of the tail of the fastener (as in Figure 7) provides a more reliable inspection method which can be used to check the tail of a suspect fastener, identified during a more comprehensive inspection process between flights of the aircraft.

It shall also be appreciated that since the thermal image(s) are obtained from inside the fuel chamber 12, the method of Figure 7 may also be used to inspect fasteners which extend through aircraft fuel tank fastener assemblies in which the lower cover 10 and/or the rib foot 5a are formed from non-infrared transparent materials.

**In** either case, the method may be used to inspect not only a single suspect fastener, but also other neighbouring fasteners adjacent to the suspect fastener.

The multiple fasteners may be heated and inspected one-by-one using the heating process of Figure 4 in which the probe 50 is in physical contact with a single fastener, and the imaging process of Figure 5 or Figure 7 in which the field of view of the camera 60 only contains a single fastener. Alternatively, multiple fasteners may be simultaneously heated by a non-contact heater (such as an infrared heating lamp which heats the fasteners by radiative heat transfer rather than conduction) and simultaneously imaged by a single camera in which all of the fasteners are in the field of view of the camera.

In the examples above there is no contact between the tail 22-24 of the fastener and the cap 30. Alternatively the cap 30 may contact part of the tail of the fastener, such as the washer 23. See for example US2016/0244181 which discloses a cap with a hook which contacts an underside of a washer, or US2016/0138641 which discloses a cap which contacts the sides of washer.

Preferably there is no contact between the nut 22 and the cap 30 when the nut 22 is intact, so the nut fragments 22a, 22b have space to fall away from the bolt.

In the examples above, the nut 22 is designed to be tightened with access to both the head and tail of the fastener 11 . In other embodiments of the invention the fastener may be a blind fastener of the kind described in US2022/0063837, where the nut is an internally threaded sleeve which deforms during installation of the blind fastener, and has an outer periphery with a circular cross-section.

In summary, one or more thermal images of the tail of a fastener 11 are obtained. At least part of the tail 22-24 of the fastener is visible in each thermal image. Each image is then inspected to determine the integrity of the tail of the fastener. The process allows for a quick and seamless check to be made of the tail of a fastener underneath a spark containment cap 30.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A method of inspecting an aircraft fuel tank fastener assembly, the assembly comprising: a fuel tank (4) with a fuel chamber (12); a fastener (11) comprising a head (20) and a tail (22-24) at opposite ends of the fastener; and a cap (30) inside the fuel chamber, wherein the cap surrounds the tail of the fastener, the method comprising: heating the tail of the fastener; obtaining a thermal image of the tail of the fastener; and inspecting the thermal image of the tail of the fastener.

2. A method according to claim 1, further comprising identifying the fastener as a suspect fastener before heating the tail of the fastener, and optionally wherein identifying the fastener as a suspect fastener comprises identifying the fastener as a suspect fastener by visual inspection.

3. A method according to claims 1 or 2, wherein the fuel tank comprises a panel, wherein the fastener passes through the panel, wherein the cap comprises a cap body, and wherein the panel and/or the cap body are formed from a polymeric material.

4. A method according to claim 3, wherein the fuel tank comprises a fibre-reinforced polymer panel; and the fastener passes through the fibre-reinforced polymer panel.

5. A method according to claim 3, wherein the cap body is formed from polyetherimide.

6. A method according to any preceding claim, wherein the tail of the fastener is heated individually, with substantially no heating of any neighbouring fasteners as the tail of the fastener is heated.

7. A method according to any preceding claim, wherein heating the tail of the fastener comprises: contacting the head of the fastener with a probe; and using the probe in contact with the head of the fastener to heat the tail of the fastener.

8. A method according to claim 7, comprising contacting the head of the fastener with a probe outside the fuel chamber; using the probe in contact with the head of the fastener to heat the tail of the fastener; disengaging the probe from the head of the fastener; and then obtaining the thermal image of the tail of the fastener with the probe disengaged from the head of the fastener so that the probe does not obscure the tail of the fastener in the thermal image.

9. A method according to any preceding claim, wherein heating the tail of the fastener comprises: contacting the head of the fastener with a probe; and using the probe to heat the tail of the fastener by conductive transfer of thermal energy from the probe to the tail of the fastener via the head of the fastener.

10. A method according to any preceding claim, comprising using a heating device outside the fuel chamber to heat the tail of the fastener; and using a camera inside the fuel chamber to obtain the thermal image of the tail of the fastener.

11. A method according to any of claims 1 to 9, comprising using a camera outside the fuel chamber to obtain the thermal image of the tail of the fastener.

12. A method according to any preceding claim, wherein there is a volume of air between the tail of the fastener and the cap, and optionally wherein there is no contact between the tail of the fastener and the cap.

13. A method according to any preceding claim, wherein the head of the fastener is outside the fuel chamber and the tail of the fastener is inside the fuel chamber.

14. A method according to any preceding claim, wherein the thermal image of the tail of the fastener is obtained from a viewing angle which is selected such that at least part of the tail of the fastener is visible in the thermal image, and not obscured by the head of the fastener.

15. A method according to any preceding claim, comprising obtaining multiple thermal images of the tail of the fastener from different viewing angles; and inspecting the multiple thermal images of the tail of the fastener.

## Patentansprüche

1. Verfahren zum Prüfen einer Befestigungsbaugruppe für einen Flugzeugtreibstofftank, wobei die Baugruppe umfasst: einen Treibstofftank (4) mit einer Treibstoffkammer (12); ein Befestigungselement (11), umfassend einen Kopf (20) und ein Endstück (22-24) an gegenüberliegenden Enden des Befestigungselements; und eine Kappe (30) innerhalb der Treibstoffkammer, wobei die Kappe das Endstück des Befestigungselements umgibt, wobei das Verfahren umfasst: Erhitzen des Endstücks des Befestigungselements; Erhalten eines Wärmebildes des Endstücks des Befestigungselements; und Prüfen des Wärmebildes des Endstücks des Befestigungselements.

2. Verfahren nach Anspruch 1, weiter umfassend das Identifizieren des Befestigungselements als ein verdächtiges Befestigungselement vor einem Erhitzen des Endstücks des Befestigungselements, und wobei ein Identifizieren des Befestigungselements als ein verdächtiges Befestigungselement optional ein Identifizieren des Befestigungselements als ein verdächtiges Befestigungselement durch eine Sichtprüfung umfasst.

3. Verfahren nach Anspruch 1 oder 2, wobei der Treibstofftank eine Platte umfasst, wobei das Befestigungselement durch die Platte verläuft, wobei die Kappe einen Kappenkörper umfasst, und wobei die Platte und/oder der Kappenkörper aus einem Polymermaterial gebildet sind.

4. Verfahren nach Anspruch 3, wobei der Treibstofftank eine faserverstärkte Polymerplatte umfasst; und das Befestigungselement durch die faserverstärkte Polymerplatte verläuft.

5. Verfahren nach Anspruch 3, wobei der Kappenkörper aus Polyetherimid gebildet ist.

6. Verfahren nach einem vorstehenden Anspruch, wobei das Endstück des Befestigungselements einzeln erhitzt wird, ohne dass benachbarte Befestigungselemente im Wesentlichen erhitzt werden, während das Endstück des Befestigungselements erhitzt wird.

7. Verfahren nach einem vorstehenden Anspruch, wobei ein Erhitzen des Endstücks des Befestigungselements umfasst: Inkontaktbringen des Kopfs des Befestigungselements mit einer Sonde; und Verwenden der Sonde, die mit dem Kopf des Befestigungselements in Kontakt steht, um das Endstück des Befestigungselements zu erhitzen.

8. Verfahren nach Anspruch 7, umfassend das Inkontaktbringen des Kopfes des Befestigungselements mit einer Sonde außerhalb der Treibstoffkammer; Verwenden der Sonde, die mit dem Endstück des Befestigungselements in Kontakt steht, zum Erhitzen des Endstücks des Befestigungselements; Lösen der Sonde vom Kopf des Befestigungselements; und anschließend Erhalten des Wärmebilds des Endstücks des Befestigungselements, wobei die Sonde vom Kopf des Befestigungselements gelöst ist, so dass die Sonde das Endstück des Befestigungselements im Wärmebild nicht verdeckt.

9. Verfahren nach einem vorstehenden Anspruch, wobei ein Erhitzen des Endstücks des Befestigungselements umfasst: Inkontaktbringen des Kopfes des Befestigungselements mit einer Sonde; und Verwenden der Sonde zum Erhitzen des Endstücks des Befestigungselements durch leitende Übertragung von Wärmeenergie von der Sonde auf das Endstück des Befestigungselements über den Kopf des Befestigungselements.

10. Verfahren nach einem vorstehenden Anspruch, umfassend das Verwenden einer Heizvorrichtung außerhalb der Treibstoffkammer zum Erhitzen des Endstücks des Befestigungselements; und Verwenden einer Kamera innerhalb der Treibstoffkammer, um ein Wärmebild des Endstücks des Befestigungselements zu erhalten.

11. Verfahren nach einem der Ansprüche 1 bis 9, umfassend das Verwenden einer Kamera außerhalb der Treibstoffkammer, um das Wärmebild des Endstücks des Befestigungselements zu erhalten.

12. Verfahren nach einem vorstehenden Anspruch, wobei sich zwischen dem Endstück des Befestigungselements und der Kappe ein Luftvolumen befindet, und wobei optional kein Kontakt zwischen dem Endstück des Befestigungselements und der Kappe besteht.

13. Verfahren nach einem vorstehenden Anspruch, wobei sich der Kopf des Befestigungselements außerhalb der Treibstoffkammer und das Endstück des Befestigungselements innerhalb der Treibstoffkammer befindet.

14. Verfahren nach einem vorstehenden Anspruch, wobei das Wärmebild des Endstücks des Befestigungselements aus einem Betrachtungswinkel erhalten wird, der so gewählt ist, dass zumindest ein Teil des Endstücks des Befestigungselements im Wärmebild sichtbar ist und nicht durch den Kopf des Befestigungselements verdeckt wird.

15. Verfahren nach einem vorstehenden Anspruch, umfassend das Erhalten mehrerer Wärmebilder des Endstücks des Befestigungselements aus verschiedenen Blickwinkeln; und Prüfen der mehreren Wärmebilder des Endstücks des Befestigungselements.

## Revendications

1. Procédé d'inspection d'un ensemble de fixation de réservoir de carburant d'aéronef, l'ensemble comprenant : un réservoir de carburant (4) présentant une chambre de carburant (12) ; une fixation (11) comprenant une tête (20) et une queue (22 à 24) à des extrémités opposées de la fixation ; et un capuchon (30) à l'intérieur de la chambre de carburant, dans lequel le capuchon entoure la queue de la fixation, le procédé comprenant : le chauffage de la queue de la fixation ; l'obtention d'une image thermique de la queue de la fixation ; et l'inspection de l'image thermique de la queue de la fixation.

2. Procédé selon la revendication 1, comprenant en outre l'identification de la fixation en tant que fixation suspecte avant le chauffage de la queue de la fixation, et facultativement dans lequel l'identification de la fixation en tant que fixation suspecte comprend l'identification de la fixation en tant que fixation suspecte par inspection visuelle.

3. Procédé selon la revendication 1 ou la revendication 2, dans lequel le réservoir de carburant comprend un panneau, dans lequel la fixation passe à travers le panneau, dans lequel le capuchon comprend un corps de capuchon, et dans lequel le panneau et/ou le corps de capuchon sont formés à partir d'un matériau polymère.

4. Procédé selon la revendication 3, dans lequel le réservoir de carburant comprend un panneau en polymère renforcé de fibres ; et la fixation passe à travers le panneau en polymère renforcé de fibres.

5. Procédé selon la revendication 3, dans lequel le corps de capuchon est formé à partir de polyétherimide.

6. Procédé selon une quelconque revendication précédente, dans lequel la queue de la fixation est chauffée individuellement, avec sensiblement aucun chauffage des fixations voisines pendant que la queue de la fixation est chauffée.

7. Procédé selon une quelconque revendication précédente, dans lequel le chauffage de la queue de la fixation comprend : la mise en contact de la tête de la fixation avec une sonde ; et l'utilisation de la sonde en contact avec la tête de la fixation pour chauffer la queue de la fixation.

8. Procédé selon la revendication 7, comprenant la mise en contact de la tête de la fixation avec une sonde à l'extérieur de la chambre de carburant ; l'utilisation de la sonde en contact avec la tête de la fixation pour chauffer la queue de la fixation ; le fait de désolidariser la sonde de la tête de la fixation ; et ensuite l'obtention de l'image thermique de la queue de la fixation avec la sonde désolidarisée de la tête de la fixation de telle sorte que la sonde ne masque pas la queue de la fixation sur l'image thermique.

9. Procédé selon une quelconque revendication précédente, dans lequel le chauffage de la queue de la fixation comprend : la mise en contact de la tête de la fixation avec une sonde ; et l'utilisation de la sonde pour chauffer la queue de la fixation par transfert d'énergie thermique par conduction depuis la sonde vers la queue de la fixation via la tête de la fixation.

10. Procédé selon une quelconque revendication précédente, comprenant l'utilisation d'un dispositif chauffant à l'extérieur de la chambre de carburant pour chauffer la queue de la fixation ; et l'utilisation d'une caméra à l'intérieur de la chambre de carburant pour obtenir l'image thermique de la queue de la fixation.

11. Procédé selon l'une quelconque des revendications 1 à 9, comprenant l'utilisation d'une caméra à l'extérieur de la chambre de carburant pour obtenir l'image thermique de la queue de la fixation.

12. Procédé selon une quelconque revendication précédente, dans lequel il existe un volume d'air entre la queue de la fixation et le capuchon, et facultativement dans lequel il n'y a aucun contact entre la queue de la fixation et le capuchon.

13. Procédé selon une quelconque revendication précédente, dans lequel la tête de la fixation est à l'extérieur de la chambre de carburant et la queue de la fixation est à l'intérieur de la chambre de carburant.

14. Procédé selon une quelconque revendication précédente, dans lequel l'image thermique de la queue de la fixation est obtenue à partir d'un angle de vue qui est sélectionné de telle sorte qu'au moins une partie de la queue de la fixation soit visible sur l'image thermique, et non masquée par la tête de la fixation.

15. Procédé selon une quelconque revendication précédente, comprenant l'obtention de multiples images thermiques de la queue de la fixation sous différents angles de vue ; et l'inspection des multiples images thermiques de la queue de la fixation.
